Europäisches Patentamt

European Patent Office

Office européen des brevets

(19)

(11) Publication number: **0 313 312**
**A2**

(12) # EUROPEAN PATENT APPLICATION

(21) Application number: **88309755.2**

(22) Date of filing: **18.10.88**

(51) Int. Cl.4: **G05B 19/00** , **//A43D3/02,
B29C45/26**

(30) Priority: **23.10.87 GB 8724904**

(43) Date of publication of application:
**26.04.89 Bulletin 89/17**

(84) Designated Contracting States:
**DE ES FR GB IT**

(71) Applicant: **C & J CLARK LIMITED
Street
Somerset(GB)**

(72) Inventor: **Ralphs, George Trevor
Blackacre Cottage Bradford Leigh
Bradford-on-Avon Wiltshire(GB)**
Inventor: **Maltby, Robert William
1, Wilcot Close Holbrook Lane
Trowbridge Wiltshire(GB)**

(74) Representative: **Boydell, John Christopher et
al
Stevens, Hewlett & Perkins 5 Quality Court
Chancery Lane
London, WC2A 1HZ(GB)**

(54) **Manufacture of lasts for footwear.**

(57) A method of moulding lasts for footwear, in
which the mould is created by means of data pre-
viously generated and stored by analysis of the
exterior contour of a model last having a shape to be
reproduced by the mould. The stored data takes the
form of a plurality of individual co-ordinates each
defining the position, relative to a datum point, of a
point on the exterior surface of a required last shape.
An insert is moulded into the last at a preset position
relative to said datum point and provides, on the
exterior of the last, location means whereby the last
may be accurately located relative to said datum
point on associated footwear-making machinery.

## "MANUFACTURE OF LASTS FOR FOOTWEAR"

This invention relates to a method of manufacturing lasts for footwear, and in particular to a method of manufacturing a mould suitable for moulding such lasts.

Conventionally lasts are manufactured by machining from a block of suitable material such as polyethelene.

There are however known moulding techniques whereby the mould is produced by using the last as the actual model or pattern. This system is reasonably satisfactory when making a one piece or "solid" last but presents considerable difficulties when a two piece or as is known in the trade a last with a "last break" is required.

The type of last with which the present invention is concerned is the latter and the particular type of "last break" is one whereby a forepart portion and heel portion are slidably displaceable with respect to one another, usually about an arc, to enable the heel-to-toe length of the last to be shortened from its full length. There are two reasons why such shortening might be required:-

1) in order to allow an upper to be placed over the shortened last which latter can then by lengthened to its full length to stretch the upper over it;

2) after making the shoe, to allow the last to be shortened to enable the shoe to be removed without distorting it.

Conventionally turned (machined) lasts are not accurate one to another to the extent required for future automation. One of the main reasons for this is that they are hand finished on the toe and heel to remove the material left by the lathe turning centres. On the other hand with moulded lasts, every last produced in a given mould will be identical one to another.

Recent years have seen significant advances in computerisation and in particular in the computer control of machine tools. The present invention seeks to utilise the new technology to enable the manufacture of moulded footwear lasts.

According to the invention there is provided a method of moulding footwear lasts in a mould defining a mould cavity, said method comprising generating data representative of the exterior contour of a required shape of last in three dimensions, storing said data, thence utilising said data to form the shape of the internal contour of the mould cavity. Once a mould having a desired internal contour has been made, it can be used many times over to rapidly produce a desired style of last. Preferably the data is operated on before use to generate the desired size of mould automatically without having to initially make a different model for each size in a particular style of footwear.

An increasingly common practice in the footwear industry is the use of a two-part last comprising a back part and a toe part with a (usually) planar dividing line between the two. For a particular shoe size and heel height a "standard" backpart can be used onto which a desired shape of toe part is attached to give the required style of footwear. These standard backparts, which may be provided with an arcuate last break in the manner described above, may be manufactured by the method of the present invention and the word "last" should accordingly be construed as meaning either a whole last, or a last standard backpart.

In a preferred embodiment, the interior contour of the mould cavity is formed by means of cutting machinery controlled by the stored data representing the exterior contour of the desired last shape. The mould itself is manufactured from material blanks, usually of metal such as aluminium alloy. To allow opening of the mould after the moulding operation has been completed it is formed in at least two parts, for example split down a vertical line from toe to heel.

In case of the type of "last break" referred to, then the two main body parts and a lid are the minimum requirements.

For ease of machining the mould however, four parts are desirable, that is two main body parts, a lid, and a bottom part.

One possible arrangement, for example, is a six part mould consisting of the two main body parts split along the arcuate joining line of the forepart to the heel, a lid, and a bottom part.

With a multi-part mould, such as is described above, the machinery can be controlled in such a way as to automatically and separately machine each part in such a way as to enable them to fit together to define an accurate and smoothly-contoured mould cavity.

In an alternative method of forming the mould cavity, the mould is itself made by moulding, utilising a last whose exterior shape has been formed by means of cutting machinery controlled by said stored data.

The last of the invention may be made from any suitable mouldable material. Examples include polyurethane in the form of a solid or blown elastomer, nylon or poly propylene. During moulding the mould may be heated or cooled depending on the type of material used for making the last. In the case of polyurethane it will be heated, and the temperature will vary according to the material formulation. A typical temperature would be 60°. A suitable grade of polyurethane for the purpose of a last would be such as to give 70 Shore D hardness. In the case of a last with the type of "last break" referred to the heel part is preferably of a softer grade, - for example 40 Shore D hardness - in order to reduce the possibility of damage at the bottom forward edge of the heel part, which is fairly fragile.

One way of generating data representative of the exterior contour of the required last is to initially manufacture a model last of a desired shape. The data is then generated by defining about the exterior surface of the model a large number of points spaced apart from one another. The spacial co-ordinates of each of these points, relative to a datum point, are thence fed to a computer by any suitable means so that a picture of the whole model last in three dimensions can be generated. The points chosen must be positioned and spaced with respect to their neighbours very carefully so that the computer has a full and unambiguous picture of the whole model. For example, rapidly changing contours will require relatively closely spaced points to ensure accurate reproduction by the computer. The co-ordinate data fed into the computer is acted upon in order to fill in the points, according to a prearranged computer program, to build up a complete and continuous contour of the model last. It is this contour, in the form of computer data, which is subsequently used, possibly after being operated on by another computer program to proportionate it up or down according to the footwear size required, to control the cutting machinery which makes the mould.

The exact position of the datum point is a matter of choice; however, there have been recent moves in the industry to standardise the datum point for computer-generated last shapes as being a point at the centre and bottom of the heel of the last.

An alternative way of generating data representative of the exterior contour of the required last is to build up a picture of the required last shape directly on a computer. Commercially available programmes enable a shoe designer to create a three-dimensional image which can be viewed on a computer screen. When the designer is satisfied with the shape he has created, the co-ordinates of the points are, as before, stored for later use.

In order that the last may be attached to associated footwear-making machinery, an insert is moulded into the last during the moulding operation, which insert provides, on the exterior of the last, location means whereby the last may be located on the machinery. Attachment means may also be provided for detachably securing the last to the machinery. The exact nature of the location and attachment means varies from machine to machine. However, it is important, when moulding the insert into the last, to ensure that the insert is positioned at an exact and reproduceable position with respect to the exterior contour of the last so that the last is accurately located on the associated machinery; thus human intervention to position the last is unnecessary, and this lends itself to robot operation. This is achieved by attaching the insert to the mould, prior to the moulding operation, at a preset and reproduceable position relative to the datum point from which the spatial co-ordinates of the points making up the exterior contour are taken.

In accordance with a second aspect of the invention there is provided a footwear last manufactured by moulding within the mould cavity of a mould, which mould cavity is created from computer generated data stored in a memory in such a way that the shape of the internal contour of the mould cavity is dictated by the stored data.

In order that the invention may be better understood, some embodiments thereof will now be described by way of example only and with reference to the accompanying drawings in which:-

Figure 1 is a side view of an embodiment of a mould, useable for the moulding of "two part" lasts according to the invention, and with one side part removed for clarity;

Figure 2 is a section on the lines II-II of Figure 1, but with the missing side part in place;

Figure 3 is a view similar to Figure 1, but with the lid in place and showing the last fore part already moulded;

Figure 4 is a view similar to Figure 3 showing additionally the last heel part already moulded;

Figure 5 is a longitudinal sectional view of the finished last;

Figures 6 and 7 are side and end views respectively of the finished last, illustrating an exemplary method of attachment to a last post forming part of associated shoe making machinery;

Figure 8 is a diagrammatic view similar to Figure 5, showing an alternative form of last construction; and

Figure 9 is a view similar to Figure 8 showing a still further form of last construction.

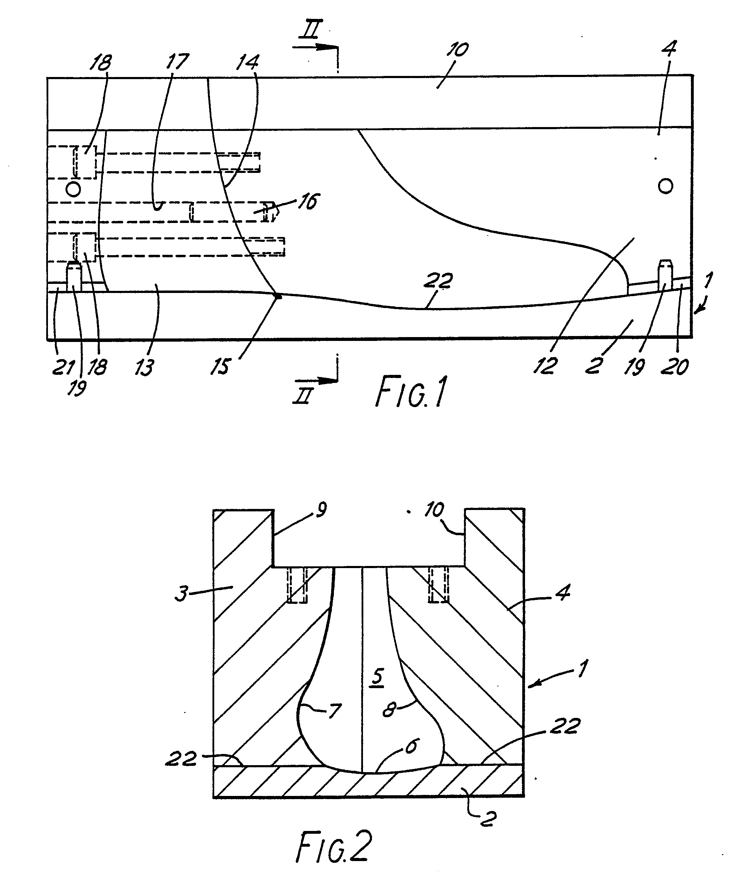

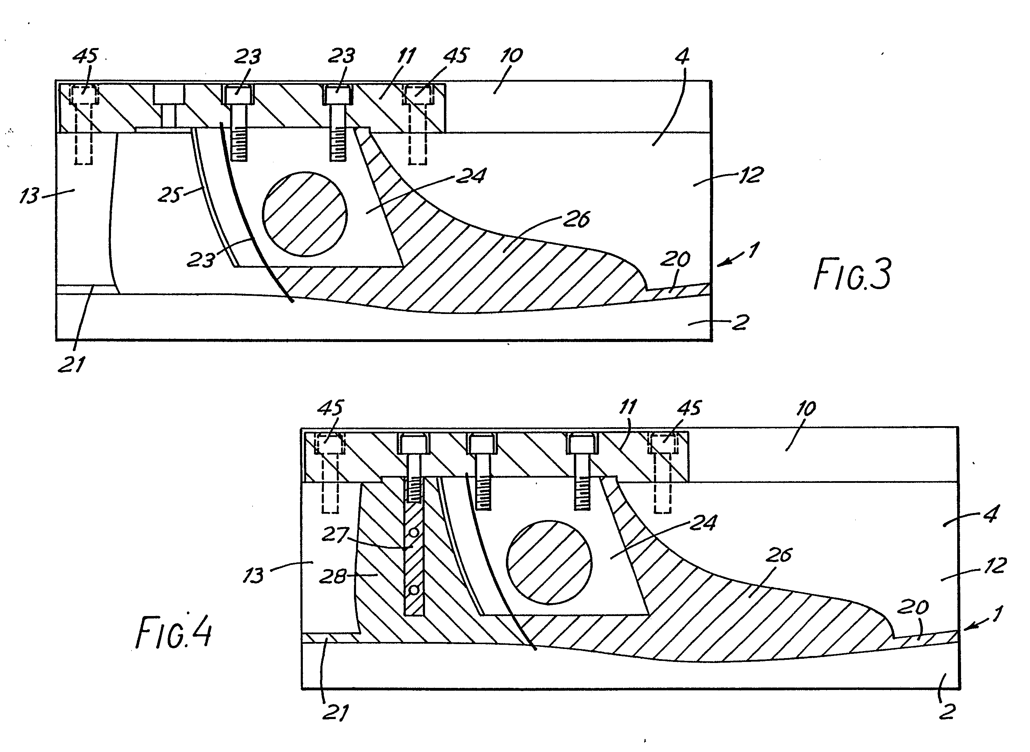

Referring to Figures 1 and 2, the mould 1 comprises a bottom part 2 and side parts 3 and 4 which, during moulding, are clamped together to define a mould cavity 5. Mould side part 3 is not shown in Figure 1. The internal shape of cavity 5 is defined by a contour 6 on the bottom part 2 and contours 7 and 8 on the side parts 3 and 4 respectively. Rebates 9,10 formed in the side parts 3 and 4 respectively define, when the parts 3 and 4 are brought together, a groove which locates the lid 11 of the mould cavity (see Figure 3). During moulding the lid is likewise clamped in place by means, not shown.

The mould side parts are themselves each formed as two parts: a fore part 12 corresponding roughly to the main body portion, including the toe portion, of the finished last, and a heel part 13 corresponding roughly to the heel portion of the finished last. The dividing line 14 between the two is circular to thus enable the fore part and heel part of the finished last to slide in a circular motion with respect to one another. The purpose of this feature is explained above. A shallow slot 15 is formed in the top surface of the bottom part 2 right across the contour 6. As seen in Figure 1, this slot 15 is formed at a slight angle, in line with the imaginary continuation of the dividing line 14 between the fore part 12 and the heel part 13 of the side parts 3/4.

The fore part and heel part of each of the mould side parts 3/4 are located with respect to one another by means of a dowel 16 housed in a blind bore 17 formed in registry between the parts 12/13. Bolts 18 are used to attach the two mould parts 12,13 together. Dowels 19 protruding upwardly from the top surface of the bottom part 2 are intended for location of the mould side part 3, which is missing from Figure 1. A passage 20 is formed at the toe end and extends from the mould cavity 5 to the exterior for the purpose of enabling the injection, during moulding, of a liquid reaction moulded material, such as polyurethane. A similar passage 21 is formed at the heel end. Both passages are formed across the dividing line between mould parts 3 and 4 by forming a suitably-shaped cut out in the corner of the respective part 3 or 4 so that, with the parts 3 and 4 butted together for moulding, a closed passage is formed.

It will be noted that the internal shape of the mould cavity 5 representing, as it does, the external shape of the last, is very complex. Even the bottom surface (contour 6) will, in many cases be of relatively complex shape. Machining of the internal contour is achieved through the use of computer-controlled metal cutting machinery, in particular milling machinery. With each of the mould parts 2, 3 and 4 suitably mounted, a bull-nose milling machine cutter can be used to reproduce the shape required. Movement of the cutting head is controlled by a computer program deriving its information from previously stored data representative of the co-ordinates, relative to a fixed datum point, of the chosen points on the exterior of a model last. Alternatively, the stored data may be derived by a designer using a suitable computer programme to generate a desired last shape in three dimensions. Such programmes are commercially available. Prior to machining the contours 7,8 on the side parts 3,4 separate blocks for the forepart 12 and heel part 13 of each side part are squared off and the circular dividing line 14 machined. the two parts are then located by dowels 16 and attached together by bolts 18 ready for the rest of the machining work.

Machining of the block itself needed to make each of the parts 2,3 and 4, including squaring it up and machining the rebates 9,10 and the circular dividing line 14 may be carried out by conventional means, although preferably at least some of these machining operations are likewise computer controlled to achieve as near full automation as possible.

Machining of the dividing line 22 between the side parts 3,4 and bottom part 2, and representative of the "feather edge" of the last, is carried out in two separate machining operations, both under computer control on the basis of stored data representative of the line of the feather edge. One machining operation is carried out on the left side of the mould - to abut side part 3, and one on the right side of the mould -to abut side part 4. In the transverse direction -see for example the section shown in Figure 2 - the surface 22 is straight, and can therefore be machined by conventional milling cutters positioned with their axes of rotation parallel to the plane of Figure 2. In the lengthwise direction, as seen in Figure 1, the surface 22 is not straight since it follows the curved feather edge. Note also that the left and right parts of the surface 22, when seen in, for example Figure 2, are not necessarily in line with one another and it is not therefore generally possible to use just a single elongate milling cutter to cut the whole of surface 22 in one pass.

Machining of the mould parts 2,3 and 4 may conveniently be carried out using a multi-station workholder which may be indexed around, after each machining operation, to bring a new item into position for machining. For example, a four station workholder, with 90° indexing may conveniently be employed. Such a workholder may initially machine the four separate pieces required to machine the two mould side parts 3,4. Preparatory squaring off machining, in order to establish known datum planes, may be carried out before mounting on the workholder.

Referring now particularly to Figures 3 and 4, there is shown the moulding of a "two part" last utilising the mould described above.

The mould parts 2,3 and 4 are first assembled and clamped together by conventional mould clamp means (not shown). The toe end is moulded first and, for this purpose, a steel shim 23 is placed between the fore part 12 and heel part 13 of each of the side parts 3,4 as the parts 12,13 are assembled together. It will be seen that, as the parts 12,13 are bolted together by bolts 18, the shim takes up a circular contour lying along dividing line 14 and, if of suitable size, effectively separates the mould cavity 5 into toe and heel sections. The shim 23 extends downwards into the slot 15 in the bottom part 2 and upwards into a similar slot in the undersurface of lid 11 (which latter is not in place at this stage).

After assembly of the main mould parts 2,3 and 4, the lid 11 is prepared by attaching to it by means of bolts 23 a metal insert 24. The bolts 23 enter and engage with threaded bores in the insert. The insert 24 is generally planar and has the shape clearly illustrated in Figure 3; the rear (heel) edge, however, which is of circular configuration, is formed with a T-section flange 25, for a purpose to be described below.

The lid 11, complete with insert 24, is now placed in the groove formed by the rebates 9,10, in which groove the lid is a close sliding fit. The lid is placed over the hole at the top of the mould cavity 5 to thereby close the cavity 5, except for vents (not shown) to permit escape of air during moulding, and is bolted in position using bolts 45. These bolts ensure that the lid, and hence the insert, is accurately positioned with respect to the datum point. When in position, the lid engages in its undersurface groove, the upper edge of the shim 23. It will be noted that the insert 24 extends from the toe section of mould cavity 5 into the heel section and, for this purpose, a slot has to be cut in the shim 23.

Moulding may now be carried out in the usual manner by injection through passage 20. The finished moulded toe portion is shown in section under reference 26 in Figure 3.

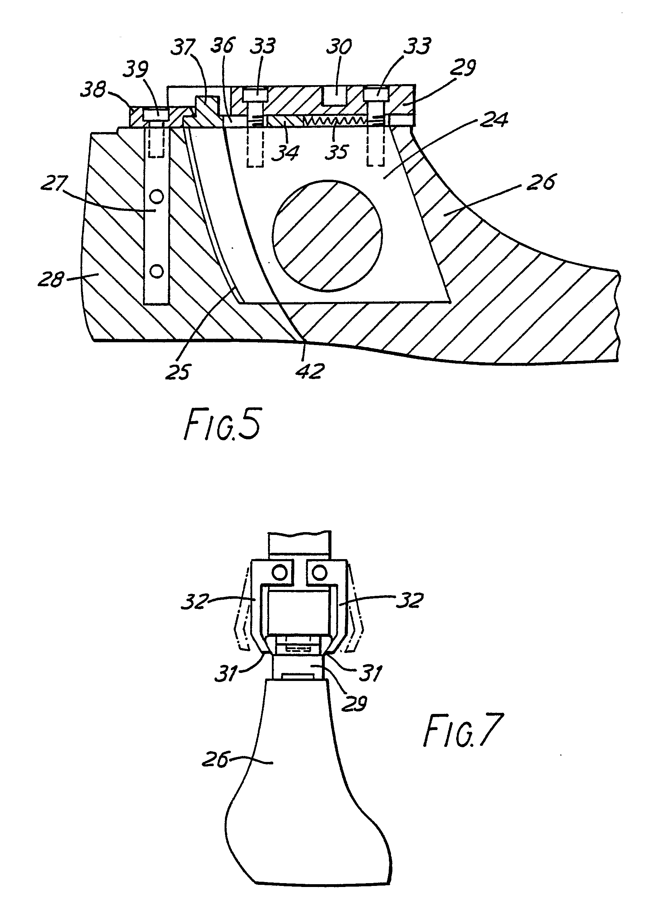

After moulding of the toe portion, the mould is temporarily dismantled sufficiently to enable removal of the shim 23. Before reassembly, the lid 11 is equipped with a reinforcing bar 27 for the heel portion. The mould is now reassembled, without the shim. That part of the insert 24 which protrudes from the toe portion 26 is treated with mould release. Injection of the heel portion, shown in section in Figure 4 under reference 28, is now carried out through passage 21. As mentioned above, the heel portion may advantageously be made of softer material than the toe portion, in order to prevent damage to the vulnerable edge 42 of the heel portion (see Figure 5). Moulding of the last is now completed by dismantling the mould and unscrewing lid 11. After moulding, the two portions 26,28 of the last should be held together by the action of the T-section flange 25 on the insert 24. As the heel portion is moulded, the existence of this flange results in a corresponding T-section groove in the heel portion. The two portions may thus slide in a circular motion with respect to one another and this has the effect of shortening the heel-to-toe distance for the purposes described above.

Particular reference is now made to Figures 5, 6 and 7 which show the completed last and, in particular its manner of attachment to associated footwear-making machinery. Attached to the top of the toe portion 26 of the last by means of bolts 33 is an elongate metal member 29 having a blind bore 30 formed in its top surface for location purposes. It will be noted that the use of an accurately-positioned insert within the moulded last ensures that the location bore 30 is accurately positioned with respect to the datum point. The upper portion of member 29 is wider and the interface between the lower, relatively narrower, portion and the wider upper portion is effected by way of a pair of oppositely disposed sloping surfaces 31. These sloping surfaces 31 may be gripped by jaws 32 on associated footwear making machinery to thus enable the various operations using the last to be carried out. It will be seen that the last can readily be released by opening the jaws 32 (see Figure 7), and this style of construction readily lends itself to automation by robot-type machinery. Lateral blind bores 43 on either side of member 29 may further serve to assist in picking up the last by robot or similar automatic machinery.

The undersurface of the member 29 is formed with a groove which, together with the top surface of the last, defines a rectangular slot in which is slidably mounted a rectangular plunger 34, forming part of a latch mechanism which latches the toe and heel portions of the last together in the operative position illustrated in Figures 5 and 6. The plunger 34 is spring biassed in a leftwards direction in Figure 5 by means of a spring 35 acting between the right-hand end of the plunger and the right-hand bolt 33. Movement of the plunger is limited by a slot 36 cut in the plunger and through which the left-hand bolt 33 passes. The plunger emerges from its slot at the left-hand end, and is enlarged upwards at 37 to provide means whereby it may be actuated.

As can be seen from Figure 5, the spring loaded plunger co-operates with a latch member 38 attached by means of a bolt 39 to the insert 27 in the heel portion 28. The latch member 38 is shaped so as to define an undercut shoulder into which the end of plunger 34 may enter when the toe and heel portions are lined up accurately. The front edge of the plunger slopes so as to ride up on the edge of the heel portion 28 as the two portions are moved with respect to one another in the manner described above.

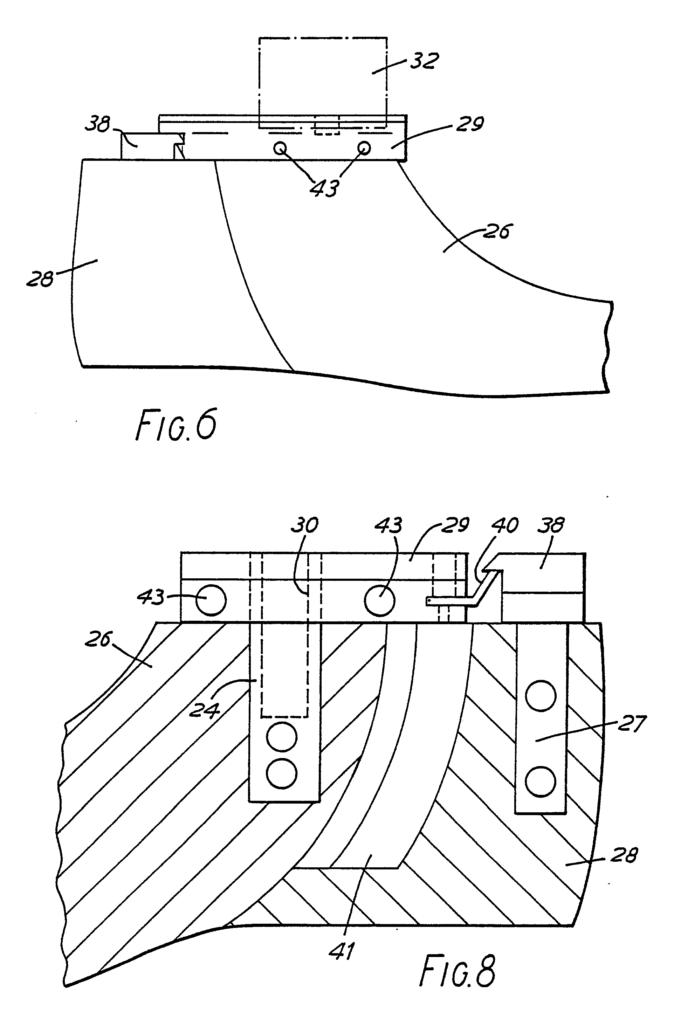

Figure 8 is a view similar to Figure 5 showing an alternative embodiment. The main differences are that the reinforcement 24 in the toe portion 28 takes the form of a rod which enables a deep locating bore 30 (traditional in the industry) to be incorporated. In addition, the method of latching is different. In this case, the member 29 has attached thereto and protruding therefrom in the direction of member 38 a tongue 40 of flexible material such as nylon. After emerging from the member 29, the tongue bends upwardly so that it readily slides over the heel portion 28 when the toe and heel portions are moved with respect to one another. In the aligned position, the end of the tongue 40 engages the undercut shoulder of the member 38 and latches behind it, preventing further movement.

The joint between the toe and heel portions is effected by forming on the toe portion, during moulding an integral, generally T-section, rail 41. The sequence of manufacture is as follows:-

1. A "dummy" spine or rail is inserted into the mould attached to a shim equivalent to the above-mentioned shim 23.

2. The heel is then moulded.

3. The "dummy" spine is removed.

4. The forepart is then moulded against the heel thus moulding the rail 41 at the same time.

This construction enables the two portions to slide with respect to one another in the manner described above.

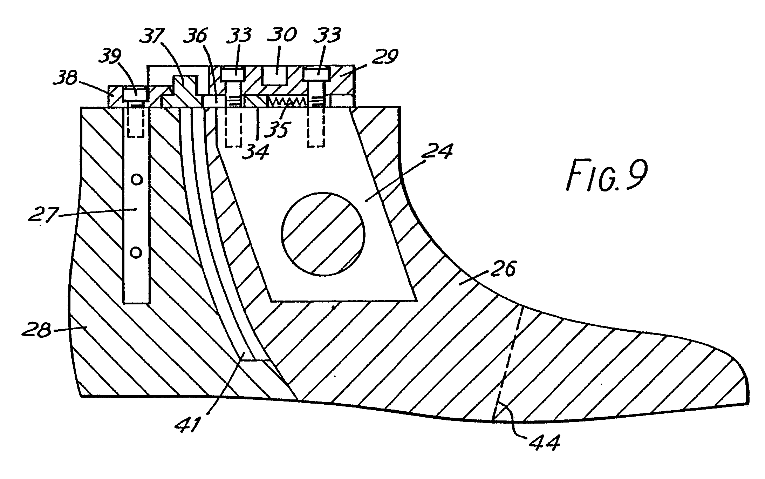

Figure 9 shows a last very similar to that shown in Figure 8, utilising a generally T-section rail 41 to join the toe and heel portions. For illustration, the method of fixing the last to associated footwear-making machinery, and utilising the member 29 and associated components, is the same as that shown in Figure 5. The insert 24 is of similar shape to that of Figure 5, but does not extend backwards to form the T-section flange 25, since this is provided for by the integral rail 41. Also shown in figure 9 is a dotted line 44 which marks the plane of separation between the backpart and the toe part of the type of last utilising a standard backpart (see above). The position of this line should be considered exemplary since different manufacturers have different ideas as to where this line should be. Clearly the methods of this invention could equally be applied to the moulding of a standard backpart as they apply to a whole last.

There has been described a method of manufacturing lasts for footwear by means of a moulding operation which ensures accurate reproducability of a previously manufactured model last. With conventional lasts we do not have an accurate datum point to refer to, and this means that shoe making machines have to "find" the last by "feel. With a computer graded and manufactured last we know where every point on the last is relative to a given datum point, about which the last will grade, such as the last location holes 30,43, thus enabling us to program shoe making machines by last identification, to set themselves automatically to carry out their functions.

**Claims**

1. A method of moulding footwear lasts in a mould defining a mould cavity, said method comprising generating data representative of the exterior contour of a required shape of last in three dimensions, storing said data, thence utilising said data to form the shape of the internal contour of the mould cavity.

2. A method as claimed in Claim 1 wherein the stored data takes the form of a purality of individual co-ordinates each defining the position, relative to a datum point, of a point on the exterior surface of a required last shape.

3. A method as claimed in Claim 2 wherein an insert is moulded into the last, which insert is attached to the mould at a preset position relative to said datum point.

4. A method as claimed in Claim 3 wherein said insert provides, on the exterior of the last, location means whereby the last may be accurately located relative to said datum point on associated footwear-making machinery.

5. A method as claimed in any one of the preceding claims wherein said data is generated by an operator utilising a computer program to create a desired last shape in three dimensions.

6. A method as claimed in any one of claims 1 to 4 wherein said stored data is created by initially manufacturing a model last of a desired shape, thence generating data representative of the exterior contour of said model last in three dimensions.

7. A method as claimed in any one of the preceding claims wherein the interior contour of said mould cavity is formed by means of cutting machinery controlled by said stored data.

8. A method as claimed in any one of Claims 1 to 6 wherein the mould is itself made by moulding, utilising a last whose shape is formed by means of cutting machinery controlled by said stored data.

9. A method as claimed in any one of the preceding claims, wherein the moulding of the last is carried out in two separate operations: a first moulding operation in which one of said forepart portion or said heel portion is moulded, and a second moulding operation, in which the other of said forepart portion or said heel portion is moulded, and wherein the second moulding operation utilises that portion moulded during the first moulding operation to define the mould cavity for the second moulding operation.

10. A method as claimed in Claim 9 wherein the second moulding operation is performed in said mould, with that portion moulded during the first moulding operation in position in the mould cavity.

11. A footwear last manufactured by moulding within the mould cavity of a mould, which mould cavity is created from computer generated data stored in a memory in such a way that the shape of the internal contour of the mould cavity is dictated by the stored data.

12. A footwear last as claimed in Claim 11 wherein the stored data takes the form of a plurality of individual co-ordinates each defining the position, relative to a datum point, of a point on the exterior surface of a required last shape, and wherein the last incorporates an insert positioned within said last at a preset position relative to said datum point.

13. A footwear last as claimed in Claim 12 wherein said insert provides, on the exterior of the last, location means whereby the last may be accurately located relative to said datum point on associated footwear-making machinery.

FIG.1

FIG.2

Fig.3

Fig.4

FIG.5

FIG.7

FIG.6

FIG.8

Fig.9